# FASCICULE DE BREVET EUROPEEN

(11) **EP 0 669 523 B1**
(45) Date de publication et mention de la délivrance du brevet: **28.08.1996**
(21) Numéro de dépôt: 95400348.9
(22) Date de dépôt: 20.02.1995
(51) Int. Cl.: G01F 23/74

(54) **Dispositif de détection de niveaux de liquide dans un bac**
Anordnung zur Messung des Flüssigkeitsniveaus in einem Behälter
Device for detecting the liquid level in a container

(30) Priorité: 28.02.1994 FR 9402235
(43) Date de publication de la demande: 30.08.1995
(73) Titulaire: SAUERMANN INDUSTRIE, F-77341 Pontault-Combault Cédex (FR)
(72) Inventeur: Lefebvre, Patrick P., F-77330 Ozoir La Ferrière (FR)
(74) Mandataire: Hasenrader, Hubert

(56) Documents cités:
- EP-A- 0 397 338
- DE-A- 3 828 520
- FR-A- 2 683 316

## Description

La présente invention concerne un dispositif de détection de niveaux de liquide dans un bac de récupération de condensat, destiné à être relié à la commande d'une pompe de relevage de condensat.

Dans les appareils de conditionnement d'air, il se produit une condensation d'eau sur les parois des échangeurs. Ces eaux de condensation tombent par gravité dans les bacs de récupération de condensat. Elles doivent ensuite être évacuées afin d'éviter des débordements. Suivant la position de ces bacs par rapport aux tuyauteries d'évacuation, il peut être nécessaire de prévoir des pompes de relevage du condensat. Ces pompes de relevage de condensat sont pourvues de systèmes de commandes qui mettent automatiquement la pompe en fonctionnement lorsque le niveau de liquide atteint un niveau maximum prédéterminé et qui arrêtent automatiquement le fonctionnement de la pompe lorsque le niveau du liquide de condensation dans le bac redescend à un niveau minimum.

Ces systèmes de commande sont reliés à des dispositifs de détection de niveau de liquide dans le bac qui émettent un premier signal lorsque le niveau de condensat atteint le niveau maximum permis et un deuxième signal lorsque le niveau de condensat atteint le niveau minimum autorisé.

Il est déjà connu des dispositifs de détection de niveau qui comportent des électrodes situées à différents niveaux dans le bac ou le réservoir. L'eau assure le passage d'un micro-courant d'une électrode vers l'autre. Ce micro-courant met en marche la pompe ou l'arrête suivant le niveau du condensat. Cette solution est peu encombrante, mais, par contre, la qualité de l'eau influe sur la valeur des micro-courants et la présence d'algues ou de gras à la surface des condensats peut provoquer des disfonctionnements.

Pour remédier à ces inconvénients, il a été proposé des dispositifs de détection de niveaux de liquides qui comportent un flotteur soulevé par le liquide, un aimant porté par le flotteur et au moins deux interrupteurs à contacts scellés, sous forme d'ampoules, disposés au voisinage du trajet dudit aimant et décalés verticalement, chacun desdits interrupteurs commandant la fermeture d'un circuit électrique relié à ladite commande lorsqu'il est soumis au champ magnétique de l'aimant. Dans les dispositifs connus, les ampoules sont disposées verticalement ou sont placées au-dessus du flotteur.

Le dispositif de détection présente une hauteur qui est au moins égale à la longueur d'une ampoule, augmentée de l'écart entre les niveaux minimum et maximum autorisés du condensat dans le bac. Cette hauteur peut être supérieure à 60mm, notamment lorsqu'il est prévu une troisième ampoule reliée à un dispositif pour détecter un niveau de sécurité supérieur au niveau maximum de mise en fonctionnement de la pompe. Dans certains types de climatiseurs (plafonniers, mini-splits muraux) qui nécessitent un bac de faible profondeur ou la mise en place du capteur de niveaux à l'extrémité du drain d'évacuation de condensats, cette hauteur minimum possible ou la taille possible du logement du capteur peut être rédhibitoire.

FR-A-2 683 316 montre un tel dispositif dans lequel les ampoules sont disposées verticalement dans un tube de guidage d'un flotteur annulaire portant un aimant annulaire .

EP-A-397 338 concerne un dispositif pour mesurer avec précision le niveau de liquide dans un réservoir de véhicule automobile. Ce dispositif comporte également un aimant annulaire porté par un flotteur cylindrique qui roule sur une paroi verticale disposée près d'une superposition d'ampoules horizontales. Le but de cette disposition n'est pas de diminuer la hauteur du dispositif, mais d'augmenter la précision des mesures.

Le but de la présente invention est de proposer un dispositif de détection de niveau de liquide dans un bac de récupération de condensat ou à l'extrémité du drain d'évacuation qui soit efficace et peu encombrant en hauteur.

L'invention concerne donc un dispositif de détection de niveaux de liquide, destiné à être relié à la commande d'une pompe de relevage de condensat afin de mettre la pompe en fonctionnement lorsque le niveau de liquide atteint un niveau maximum autorisé et à arrêter le fonctionnement de la pompe lorsque le niveau de liquide redescend à un niveau minimum, ledit dispositif comportant un flotteur soulevé par ledit liquide et guidé verticalement, un aimant porté par ledit flotteur, et au moins deux interrupteurs à contacts scellés dans une ampoule, disposés au voisinage du trajet dudit aimant et décalés verticalement, chacun desdits interrupteurs assurant la fermeture d'un circuit électrique relié à la commande lorsqu'elle se trouve dans le champ magnétique dudit aimant.

Selon l'invention, ce dispositif de détection est caractérisé par le fait que lesdites ampoules sont disposées horizontalement dans un plan vertical parallèle au déplacement du flotteur, que le flotteur a une forme globalement parallélépipédique, que l'aimant est disposé au voisinage d'un bord latéral du flotteur et qu'il est prévu une barre métallique sur le bord de flotteur opposé audit aimant.

Cette position permet de diminuer notablement la hauteur du dispositif de détection de niveaux, tout en fournissant des informations successives (marche, arrêt, alarme).

Afin de permettre une fermeture franche de chaque circuit, même en cas de faible écart entre les niveaux minimum et maximum du condensat, il est avantageusement prévu un déflecteur de champ magnétique en-dessous des ampoules. Ce déflecteur de champ magnétique est constitué d'un fil de ferro-nickel.

D'autres avantages et caractéristiques de l'invention ressortiront à la lecture de la description suivante faite à titre d'exemple et en référence aux dessins annexés dans lesquels :
- la figure 1 montre en élévation un schéma de principe d'une installation de climatisation équipée du dispositif de détection de niveaux selon l'invention;
- la figure 2 est une vue en perspective du dispositif de détection de niveaux selon l'invention;
- la figure 3 est une vue éclatée du dispositif de détection de niveaux de la figure 2 dans laquelle le couvercle a été enlevé par souci de clarté ;
- la figure 4 est une vue en élévation de la plaque de support d'ampoules;

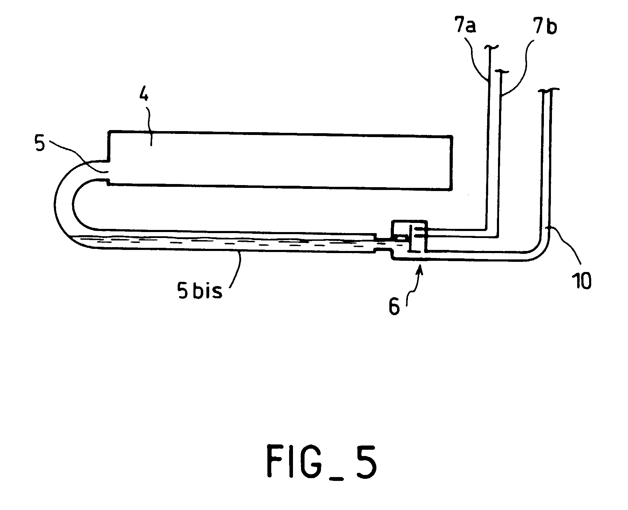

- la figure 5 montre une variante du montage du dispositif de l'invention sur le bac.

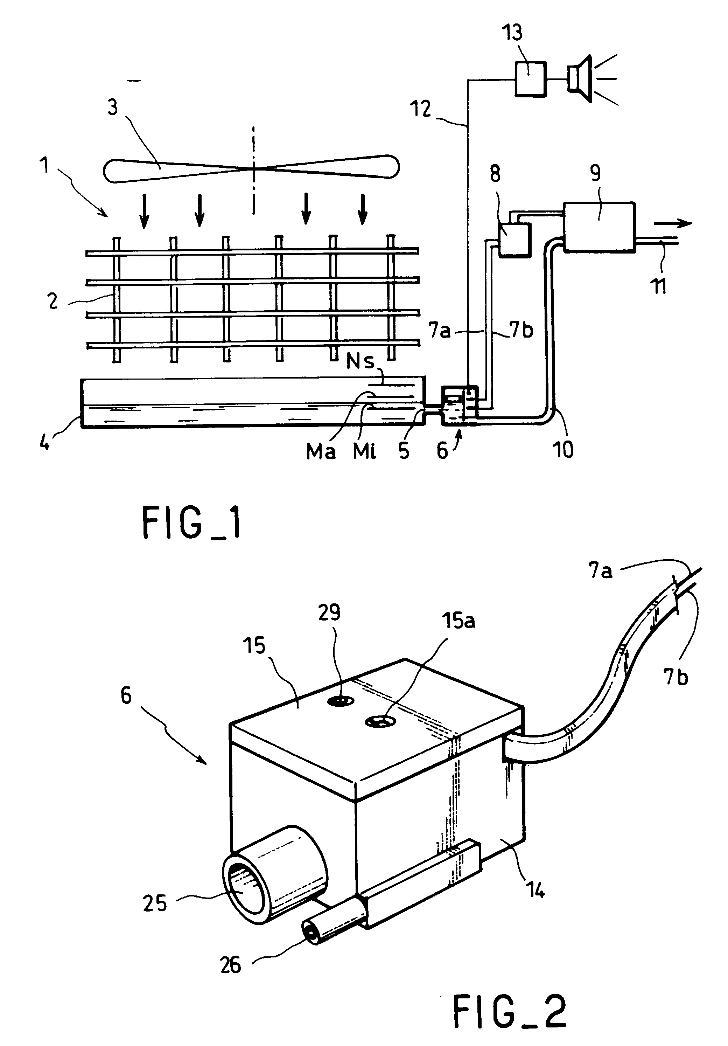

Le figure 1 montre une installation de climatisation 1 qui comporte un échangeur 2 dans lequel circule un fluide réfrigérant et qui est destiné à refroidir un air ambiant entraîné en mouvement par un ventilateur 3. Sous l'échangeur 2 est disposé un bac 4 de récupération des eaux de condensation qui s'écoulent par gravité le long des parois extérieures de l'échangeur 2. Le bac 4 comporte un orifice latéral où une tuyauterie d'évacuation de condensats 5 bis. Sur cet orifice 5 ou à l'extrémité de la tuyauterie 5 bis, est branché un dispositif 6 de détection de niveaux de liquide. Ce dispositif 6 est relié par deux circuits électriques 7a, 7b à un dispositif 8 de commande d'une pompe 9 de relevage. La pompe 9 de relevage de condensat est reliée au bac 4 par un conduit souple 10 d'aspiration et refoule le liquide pompé vers un collecteur, non représenté sur le dessin, par une conduite de refoulement 11. La communication entre le conduit souple 10 d'aspiration et le bac 4 se fait par l'intermédiaire du dispositif 6 de détection de niveaux de liquide comme cela est décrit ci-après.

Lorsque le niveau de liquide dans le bac 4 ou la tuyauterie 5 bis atteint le niveau maximum Ma, le circuit électrique 7a est fermé et le dispositif 8 de commande met en fonctionnement la pompe 9. Le condensat est aspiré par le conduit souple 10 et évacué vers le collecteur.

Lorsque le niveau de condensat redescend au niveau minimum Mi, le circuit 7b est fermé et le dispositif 8 de commande arrête le fonctionnement de la pompe 9.

Le dispositif 6 de détection de niveaux comportant un interrupteur à contact scellé dans une ampoule peut également être relié par un circuit électrique 12 à un dispositif 13 de déclenchement lorsqu'un niveau de sécurité Ns, supérieur à Ma, est atteint par le liquide dans le bac 4.

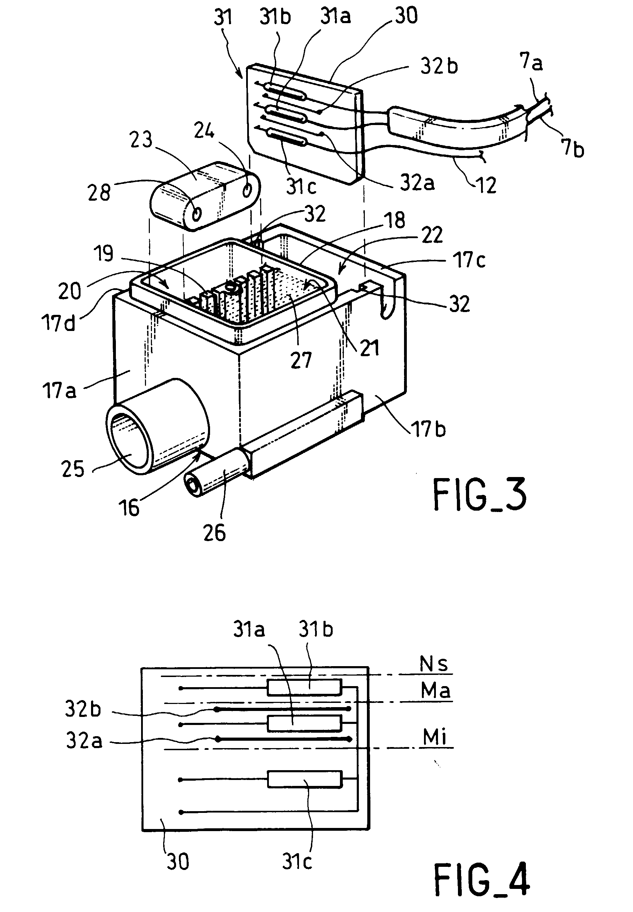

Les figures 2 et 3 montrent en détail le dispositif 6 de détection de niveaux selon l'invention.

Ce dispositif 6 de détection comporte un boîtier 14 de forme généralement parallélépipédique, fermé par un couvercle supérieur 15. Le boîtier 14 comporte un fond 16, quatre parois latérales 17a, 17b, 17c, 17d, une paroi transversale 18 ainsi qu'une grille verticale 19 perpendiculaire à la paroi transversale 18. L'intérieur du boîtier 14 est ainsi partagé en trois chambres 20, 21 et 22 qui sont fermées ensemble par le couvercle 15. Dans la première chambre 20 est prévu un flotteur 23 de forme parallélépipédique qui porte un aimant 24 près de la paroi transversale 18. La deuxième chambre 21 communique avec la première chambre 20 par la grille 19. Elle communique également avec le bac 4 ou la tuyauterie 5 bis et avec la pompe 9. A cet effet, sur la paroi latérale 17a, sont formés un premier embout 25 destiné au raccordement du boîtier 14 avec l'orifice 5 du bac 4 ou la tuyauterie 5 bis et un deuxième embout 26 destiné au raccordement du conduit souple 10. Un élément filtrant 27 remplit la deuxième chambre 21.

Un petit orifice à travers la paroi fermant partiellement le fond de l'embout 25 et la chambre 20 assure une admission d'eau directement du bac 4 ou de la tuyauterie 5 bis vers la chambre 20 en cas de colmatage de l'élément filtrant 27.

Afin de maintenir le flotteur 23 horizontalement à la surface du liquide de condensat dans la première chambre 20, il est prévu, près du bord de flotteur opposé au bord renfermant l'aimant 24, une barre métallique 28, en cuivre par exemple, qui a un poids voisin du poids de l'aimant 24.

Le boîtier 14 et le couvercle 15 sont réalisés dans une matière plastique, le couvercle 15 est fixé sur le boîtier par une vis 15a. Un trou évent 29 est prévu dans le couvercle 15 au-dessus de la première chambre 20. Ce trou évent 29 peut être obturé par la face supérieure du flotteur 23.

Dans la troisième chambre 22 est prévue une plaque 30 de montage d'ampoules 31 qui renferment un interrupteur à contacts scellés et sensibles à un champ magnétique. Ces ampoules sont du type "REED SWITCH". Cette plaque 30 est montée verticalement et est maintenue dans des rainures 32 prévues dans les parois 17b et 17d.

Les ampoules 31 qui peuvent être au nombre de deux ou au nombre de trois, sont montées à l'horizontale sur la plaque 30 dans un plan vertical voisin de la première chambre 20. L'ampoule médiane 31a permet la fermeture du circuit électrique 7b lorsqu'elle est soumise au champ magnétique de l'aimant 24. L'ampoule supérieure 31b permet la fermeture du circuit électrique 7a lorsqu'elle est soumise au champ magnétique de l'aimant 24. L'ampoule inférieure 31c, qui est optionnelle, permet d'activer le circuit électrique 12 relié au dispositif 13 de déclenchement d'une alarme. Cette ampoule 30c est activée lorsque le flotteur 23 est en position basse, lorsque le flotteur atteint le niveau Ns, elle n'est plus activée et le circuit 12 est activé. Les trois ampoules 31a, 31b, 31c sont disposées à des emplacements correspondant respectivement aux niveaux de liquide Mi, Ma, Ns.

Des fils de ferro-nickel 32a et 32b peuvent être disposés entre les ampoules 31a, 31b et 31c, en particulier lorsque les ampoules sont très proches. Ces fils permettent de modifier le champ magnétique de l'aimant 24.

La figure 4 montre la correspondance entre les positions des diodes 31a, 31b, 31c et des niveaux Mi, Ma, Ns à détecter.

Le fonctionnement de ce dispositif se comprend aisément et n'a pas besoin d'explication complémentaire.

Grâce à la disposition horizontale des ampoules 31a, 31b et 31c dans un plan vertical, des informations successives (marche, arrêt, alarme) sont obtenues logiquement tout en limitant la hauteur du dispositif 6 de détection de niveau à 30 mm.

L'aimant 24 se présente avantageusement sous la forme d'une barre métallique.

## Revendications

1. Dispositif de détection de niveaux d'un liquide dans un bac de récupération de condensat, ledit dispositif étant apte à être relié à la commande (8) d'une pompe (9) de relevage de condensat, afin de mettre la pompe en fonctionnement lorsque le niveau de liquide atteint un niveau maximum (Ma) autorisé et à arrêter le fonctionnement de la pompe (9) lorsque le niveau de liquide redescend à un niveau minimum (Mi), ledit dispositif (6) comportant un flotteur (23) soulevé par ledit liquide et guidé verticalement, un aimant (24) porté par ledit flotteur (23), et au moins deux interrupteurs (31a, 31b) à contacts scellés dans une ampoule, disposés au voisinage du trajet dudit aimant (24) et décalés verticalement, chacun desdits interrupteurs (7a, 7b) assurant la fermeture d'un circuit électrique relié à ladite commande (8) lorsqu'il se trouve dans le champ magnétique dudit aimant (24),
caractérisé en ce que lesdites ampoules (31a, 31b) sont disposées à l'horizontale, dans un plan vertical parallèle au déplacement du flotteur, en ce que le flotteur (23) a une forme globalement parallélépipédique, en ce que l'aimant (24) est disposé au voisinage d'un bord latéral dudit flotteur (23), et en ce qu'il est prévu une barre métallique (28) sur le bord de flotteur opposé audit aimant (24).

2. Dispositif selon la revendication 1, caractérisé en ce qu'il est prévu un déflecteur de champ magnétique entre lesdites deux ampoules (31a, 31b).

3. Dispositif selon la revendication 2, caractérisé en ce que ledit déflecteur de champ magnétique est constitué d'un fil (32a, 32b) de ferro-nickel.

4. Dispositif selon la revendication 1, caractérisé en ce que le flotteur (24) est disposé dans une première chambre (20), ladite chambre (20) communiquant avec une deuxième chambre (21) par l'intermédiaire d'une grille (19), ladite deuxième chambre (21) communiquant elle-même avec l'intérieur dudit bac (4) et avec la pompe (9) par des orifices (25, 26) latéraux.

5. Dispositif selon la revendication 4, caractérisé en ce qu'il est prévu un filtre (27) dans ladite deuxième chambre (21).

## Claims

1. Device for detecting the liquid level in a condensate recovery container, the device being adapted to be connected to control means (8) for controlling a condensation-raising pump (9), so as to switch the pump on when the liquid level reaches an authorized maximum level (Ma) and to stop operation of the pump (9) when the liquid level has gone back down to a minimum level (Mi), said device (6) including a float (23) that is lifted by said liquid and guided vertically, a magnet (24) carried by said float (23), and at least two switches (31a, 31b) each having contacts sealed in a capsule, the switches being disposed in the vicinity of the path of said magnet (24) and being vertically offset, each of said switches (7a, 7b) serving to switch off an electrical circuit connected to said control means (8) when said switch is in the magnetic field of said magnet (24),
characterized in that said capsules (31a, 31b) are disposed horizontally in a vertical plane parallel to the displacement of the float, in that the float (23) is generally parallelepipedic in shape, in that the magnet (24) is disposed in the vicinity of a side wall of said float (23), and in that a metal bar (28) is provided on the side of the float opposite said magnet (24).

2. Device according to claim 1, characterized in that a magnetic field deflector is provided between said two capsules (31a, 31b).

3. Device according to claim 2, characterized in that said magnetic field deflector is constituted by a ferro-nickel wire (32a, 32b).

4. Device according to claim 1, characterized in that the float (24) is disposed in a first chamber (20), said chamber (20) being in communication with a second chamber (21) via a grid (19), said second chamber (21) itself communicating with the inside of said container (4) and with the pump (9) via lateral orifices (25, 26).

5. Device according to claim 4, characterized in that a filter (27) is provided in said second chamber (21).

## Patentansprüche

1. Vorrichtung zum Feststellen von Niveaus einer Flüssigkeit in einem Kondensatauffangbehälter, wobei die Vorrichtung mit der Steuerung (8) einer Kondensathubpumpe (9) verbindbar ist, um die Pumpe einzuschalten, wenn das Flüssigkeitsniveau ein zulässiges Maximumniveau (Ma) erreicht und den Betrieb der Pumpe (9) abzuschalten, wenn das Flüssigkeitsniveau wieder auf ein Minimumniveau (Mi) absinkt, die Vorrichtung (6) einen von der Flüssigkeit angehobenen und senkrecht geführten Schwimmer (23), einen vom Schwimmer (23) getragenen Magneten (24) und wenigstens zwei Schalter (31a, 31b) mit in einem Röhrchen versiegelten Kontakten aufweist, die in der Nähe der Bewegungsbahn des Magneten (24) und senkrecht versetzt angeordnet sind, wobei jeder der Schalter einen mit der Steuerung (8) verbundenen elektrischen Kreis schließt, wenn er sich im Magnetfeld des Magneten (24) befindet,
dadurch gekennzeichnet, daß die Röhrchen (31a, 31b) waagerecht in einer zur Bewegung des Schwimmers parallelen senkrechten Ebene angeordnet sind, daß der Schwimmer (23) von ungefähr quaderförmiger Gestalt ist, daß der Magnet (24) in der Nähe eines Seitenrandes des Schwimmers (23) angeordnet ist, und daß auf dem dem Magneten (24) entgegengesetzten Schwimmerrand eine metallische Stange (28) angeordnet ist.

2. Vorrichtung nach Anspruch 1,
dadurch gekennzeichnet, daß zwischen den beiden Röhrchen (31a, 31b) ein Magnetfelddeflektor vorgesehen ist.

3. Vorrichtung nach Anspruch 2,
dadurch gekennzeichnet, daß der Magnetfelddeflektor von einem Draht (32a, 32b) aus Ferronickel gebildet ist.

4. Vorrichtung nach Anspruch 1,
dadurch gekennzeichnet, daß der Schwimmer (23) in einer ersten Kammer (20) angeordnet ist, die Kammer (20) mit einer zweiten Kammer (21) über ein Gitter (19) in Verbindung steht, die zweite Kammer (21) ihrerseits mit dem Innenraum des Behälters (4) und mit der Pumpe (9) über seitliche Öffnungen (25, 26) in Verbindung steht.

5. Vorrichtung nach Anspruch 4,
dadurch gekennzeichnet, daß in der zweiten Kammer (21) ein Filter (27) vorgesehen ist.
